# EUROPEAN PATENT APPLICATION

(11) **EP 0 587 245 A1**
(43) Date of publication of application: **16.03.1994**
(21) Application number: 93202595.0
(22) Date of filing: 06.09.1993
(51) Int. Cl.: B01J 23/74

(54) **Hydroconversion catalyst**

(30) Priority: 08.09.1992 EP 92202727
(71) Applicant: SHELL INTERNATIONALE RESEARCH MAATSCHAPPIJ B.V., NL-2596 HR Den Haag (NL)
(72) Inventor: van Ballegoy, Carolus Maria, NL-1031 CM Amsterdam (NL); Stork, Willem Hartman Jurriaan, NL-1031 CM Amsterdam (NL); Gilson, Jean-Pierre, NL-1031 CM Amsterdam (NL)

(57) **Abstract**

A catalyst of use in hydroconversion processes comprises nickel supported on a silica-alumina carrier, which carrier has been prepared from an amorphous silica-alumina starting material having a pore volume of at least 1.0 ml/g. A process for the preparation of the aforementioned catalyst comprises preparing a carrier from an amorphous silica-alumina having a pore volume of at least 1.0 ml/g and impregnating the carrier so-formed with nickel by contacting the carrier with a nickel compound in the presence of a liquid, preferably under acidic conditions. The catalyst is of general use in hydroconversion processes, in particular the preparation of middle distillates by the hydroconversion of hydrocarbons prepared by the Fischer-Tropsch process and the hydroisomerisation of alkanes.

## Description

The present invention relates to a catalyst of use in hydroconversion processes, in particular to a catalyst containing nickel as a catalytically active component.

Catalysts comprising metals from Group VIII of the Periodic Table of the Elements are known in the art for application in the hydroconversion of various hydrocarbon products. For example, UK patent No. 1 451 617 (GB 1 451 617) discloses a process for the preparation of medicinal oils in which a hydrocarbon mixture having a low aromatic content is contacted at elevated temperature and pressure with a catalyst comprising one or more noble metals from Group VIII on a carrier which contains 13 to 15% by weight of alumina, the remainder being silica. Catalysts specifically exemplified in GB 1 451 617 comprise platinum supported on silica-alumina carriers having surface areas ranging from 110 to 518 m²/g and a pore volumes ranging from 0.34 to 0.87 ml/g. The catalysts were prepared by impregnating the carrier material with an aqueous solution of chloroplatinic acid.

It has now been found that the aforementioned catalysts described and exemplified in GB 1 451 617 are suitable for use in the hydroconversion of high boiling range hydrocarbons, produced by the Fischer-Tropsch process, as a means of preparing middle distillates.

However, surprisingly, there has also been found a novel platinum-containing catalyst composition which is active as a hydroconversion catalyst. It has been found that a catalyst comprising platinum supported on a silica-alumina carrier, which carrier has been prepared from an amorphous silica-alumina having a pore volume of at least 1.0 ml/g exhibits a particularly high selectivity to middle distillates when applied in the hydroconversion of hydrocarbons produced by the Fischer-Tropsch synthesis. The catalyst has also been found to be particularly active in the hydroconversion of Fischer-Tropsch hydrocarbons when prepared by a process comprising impregnating the carrier with a platinum salt in the presence of a liquid under acidic conditions. Similar platinum containing catalysts having a carrier prepared from an amorphous silica-alumina having a pore volume of below 1.0 ml/g have been found to exhibit a higher selectivity to naphtha fractions, when applied in the hydroconversion of Fischer-Tropsch hydrocarbons. The aforementioned findings form the subject matter of pending UK patent applications Nos. 9 119 494.4, 9 119 495.1, 9 119 504.0 and 9 119 505.7 (equivalent to European patent applications publication Nos. 0 532 117, 0 532 116, 0 532 118 and 0 537 815 respectively).

Surprisingly, it has now been found that nickel-containing catalysts comprising a carrier prepared from an amorphous silica-alumina starting material having a pore volume of at least 1.0 ml/g are also excellent catalysts for use in hydroconversion processes.

Accordingly, the present invention provides a catalyst comprising nickel supported on a silica-alumina carrier, which carrier has been prepared from an amorphous silica alumina starting material having a pore volume of at least 1.0 ml/g.

The novel catalyst is of use in hydroconversion processes. The term "hydroconversion" is used herein in its broadest sense, as a reference to conversion processes occurring in the presence of hydrogen and ranging in severity, for example, from hydrocracking to mild hydrogenation processes.

The carrier for the catalyst of the present invention is amorphous silica-alumina. The term "amorphous" indicates a lack of crystal structure, as defined by X-ray diffraction, in the carrier material, although some short range ordering may be present. Amorphous silica-alumina suitable for use in preparing the catalyst is available commercially. Alternatively, the silica-alumina may be prepared by precipitating alumina or a silica hydrogel and subsequently drying and calcining the resulting material, as described in GB 1 451 617.

The catalyst may comprise any suitable amorphous silica-alumina. The amorphous silica-alumina preferably contains alumina in an amount in the range of from 5 to 30% by weight, more preferably from 10 to 20% by weight, especially from 12 to 15% by weight.

For the catalyst of the present invention, it is important that the pore volume of the amorphous silica-alumina starting material be at least 1.0 ml/g. For the purposes of this specification, all pore volumes quoted in relation to the catalyst of the present invention are references to pore volumes measured by a method involving the uptake of water into the pores of the material, often referred to as the incipient wetness method, and are generally indicated as pore volume (H₂O).

A typical procedure for determining the pore volume (H₂O) of a catalyst or carrier material comprises drying the material at a temperature of about 500°C; weighing the dried material; immersing the material in water for a period of about 15 minutes; removing the material from the water; removing the water on the surface of the material by means of a centrifuge; and weighing the resulting material. The pore volume of the material is determined from the difference between the weight of the dried material and the weight of the resulting material.

The pore volume of the amorphous silica-alumina is preferably in the range of from 1.0 to 2.0 ml/g, more preferably from 1.0 to 1.5 ml/g.

In addition to silica-alumina, the carrier may also comprise one or more binder materials. Suitable binder materials include inorganic oxides. Both amorphous and crystalline binders may be applied. Examples of binder materials comprise silica, alumina, clays, magnesia, titania, zirconia and mixtures thereof. Silica and alumina are preferred binders, with alumina being especially preferred. The binder, if incorporated in the catalyst, is preferably present in an amount of from 5 to 50% by weight, more preferably from 15 to 30% by weight, on the basis of total weight of the carrier.

The catalyst of the present invention comprises nickel as a catalytically active component. Nickel may be present in an amount in the range of from 0.05 to 50.0% by weight, more preferably from 0.1 to 20.0% by weight, especially from 0.2 to 10.0% by weight, on the basis of total weight of carrier in the catalyst.

The catalyst of the present invention may be prepared by any of the suitable catalyst preparation techniques known in the art.

The carrier may be prepared from the amorphous silica-alumina starting material by methods known to the person skilled in the art. A preferred method for the preparation of the carrier comprises mulling a mixture of the amorphous silica-alumina and a suitable liquid, extruding the mixture and drying the resulting extrudates.

The mixture to be extruded should, preferably, have a solids content in the range of from 20 to 60% by weight.

The liquid for inclusion in the mixture may be any of the suitable liquids known in the art. Examples of suitable liquids include water; alcohols, such as methanol, ethanol and propanol; ketones, such as acetone; aldehydes, such as propanal, and aromatic liquids, such as toluene. A most convenient and preferred liquid is water.

To obtain strong extrudates, the mixture preferably includes a peptising agent. Suitable peptising agents are acidic compounds, for example inorganic acids such as aqueous solutions of hydrogen fluoride, hydrogen bromide and hydrogen chloride, nitric acid, nitrous acid and perchloric acid. Preferably, the peptising agent is an organic acid, for example a mono- or dicarboxylic acid. Preferred organic acids include acetic acid, propionic acid and butanoic acid. Acetic acid is a most preferred peptising agent.

The amount of peptising agent included in the mixture should be sufficient to fully peptise the alumina present in the carrier material, and can be readily determined by the pH of the mixture. During mulling, the pH of the mixture should preferably lie in the range of from 1 to 6, more preferably from 4 to 6.

To improve the flow properties of the mixture, it is preferred to include one or more flow improving agents and/or extrusion aids in the mixture prior to extrusion. Suitable additives for inclusion in the mixture include fatty amines, quaternary ammonium compounds, aliphatic mono-carboxylic acids, ethoxylated alkyl amines, polyvinyl pyridine, and sulphoxonium, sulphonium, phosphonium and iodonium compounds, alkylated aromatic compounds, acyclic mono-carboxylic acids, fatty acids, sulphonated aromatic compounds, alcohol sulphates, ether alcohol sulphates, sulphated fats and oils, phosphonic acid salts, polyoxyethylene alkylphenols, polyoxyethylene alcohols, polyoxyethylene alkylamines, polyoxyethylene alkylamides, polyacrylamides, polyols and acetylenic glycols. Preferred agents are sold under the trademarks Nalco and Superfloc.

The flow improving agents/extrusion aids are preferably present in the mixture in a total amount in the range of from 1 to 20% by weight, more preferably from 2 to 10% by weight, on the basis of the total weight of the mixture.

In principle, the components of the mixture may be combined in any order, and the mixture mulled. Preferably, the amorphous silica-alumina and the binder, if present, are combined and the mixture mulled. Thereafter, the liquid and, if present, the peptising agent are added and the resulting mixture further mulled. Finally, any flow improving agents/extrusion aids to be included are added and the resulting mixture mulled for a final period of time.

Typically, the mixture is mulled for a period of from 10 to 120 minutes, preferably from 15 to 90 minutes. During the mulling process, energy is input into the mixture by the mulling apparatus. The rate of energy input into the mixture is typically from 0.05 to 50 Wh/min/kg, preferably from 0.5 to 10 Wh/min/kg. The mulling process may be carried out over a broad range of temperature, preferably from 15 to 50 °C. As a result of the energy input into the mixture during the mulling process, there will be a rise in the temperature of the mixture during the mulling. The mulling process is conveniently carried out at ambient pressure. Any suitable commercially available mulling apparatus may be employed.

Once the mulling process has been completed, the resulting mixture is then extruded. Extrusion may be effected using any conventional, commercially available extruder. In particular, a screw-type extruding machine may be used to force the mixture through orifices in a suitable dieplate to yield extrudates of the desired form. The strands formed upon extrusion may be cut to the desired length.

The extrudates may have any suitable form known in the art, for example cylindrical, hollow cylindrical, multilobed or twisted multilobed. A preferred shape for the catalyst particles of the present invention is cylindrical. Typically, the extrudates have a nominal diameter of from 0.5 to 5 mm, preferably from 1 to 3 mm.

After extrusion, the extrudates are dried. Drying may be effected at an elevated temperature, preferably up to 800 °C, more preferably up to 300 °C. The period for drying is typically up to 5 hours, preferably from 30 minutes to 3 hours.

Preferably, the extrudates are calcined after drying. Calcination is effected at an elevated temperature, preferably up to 1000 °C, more preferably from 200 °C to 1000 °C, most preferably from 300° to 800 °C. Calcination of the extrudates is typically effected for a period of up to 5 hours, preferably from 30 minutes to 4 hours.

Once the carrier has been prepared, nickel is deposited onto the carrier material. Any of the suitable methods known in the art may be employed, for example ion exchange, competitive ion exchange, comulling and impregnation. A most preferred method is impregnation, in which the carrier is contacted with a nickel compound in the presence of a liquid.

Accordingly, in a further aspect, the present invention provides a process for the preparation of a catalyst as hereinbefore described, which process comprises preparing a carrier from an amorphous silica-alumina starting material having a pore volume of at least 1.0 ml/g and impregnating the carrier so-formed with nickel by contacting the carrier with a nickel compound in the presence of a liquid.

Most conveniently, the nickel compound and the liquid are selected so that the compound is soluble in the liquid and the carrier is contacted with a solution of the nickel compound. Suitable liquids for use in the impregnation are both organic liquids, for example alcohols and ethers, and inorganic liquids, for example water. Water is a most convenient and especially preferred liquid.

Any suitable nickel compound may be used, with preference being given to compounds soluble in the selected liquid. Suitable compounds include both organic and inorganic compounds. Examples of suitable compounds are nickel acetate, nickel bromide, nickel bromate, nickel carbonate, nickel chloride, nickel chlorate, nickel fluoride, and nickel sulphate, as well as nickel complexes, for example hexamminenickel (II) chloride and hexamminenickel (II) iodide.

Very suitably, the nickel is deposited onto the carrier by means of an acid impregnation, in which the carrier is contacted with a nickel compound in the presence of a liquid under acidic conditions. Preferably, the acidic conditions are such that the pH is no greater than 4.0, more preferably no greater than 3.0.

Conveniently, the catalyst is prepared by an impregnation using a solution of an acidic nickel compound, the nickel compound providing both a source for the nickel and giving rise to the required conditions of acidity. A suitable acidic nickel compound is nickel nitrate. If an acidic nickel compound is not used in the impregnation of the carrier, the impregnation is preferably effected in the presence of an additional acid. If desired, both an acidic nickel compound and an additional acid are present during the impregnation of the carrier. Suitable acids for use during the impregnation include both organic and inorganic acids, for example mono- and dicarboxylic acids, hydrochloric acid, sulphuric acid and nitric acid. Nitric acid is a most suitable acid.

A preferred impregnation technique for use in the process of the present invention is the pore volume impregnation technique, in which the carrier is contacted with a solution of the nickel compound, the solution being present in a sufficient volume so as to substantially just fill the pores of the carrier material. A convenient method for effecting impregnation is by spraying the carrier with the requisite quantity of the solution.

After impregnation, the resulting catalyst is preferably dried and preferably calcined. The conditions for drying and calcining are as set out hereinbefore.

The catalyst of the present invention is active as a hydroconversion catalyst and may be used in such processes as alkane hydroisomerisation and hydrocracking. In addition, the catalyst may be applied in the selective hydroconversion of high boiling range hydrocarbons to prepare middle distillates, especially the hydroconversion of high boiling range products of the Fischer-Tropsch synthesis process.

In the Fischer-Tropsch synthesis process, a gaseous mixture comprising carbon monoxide and hydrogen is contacted with a suitable catalyst at an elevated temperature and pressure, to yield hydrocarbons. Preferably, the catalyst employed comprises a metal from the iron group of Group VIII of the Periodic Table of elements as catalytically active component, optionally in association with one or more promoters. A most suitable Fischer-Tropsch catalyst comprises cobalt as a catalytically active component and zirconium as a promoter supported on a refractory oxide carrier, for example alumina, silica, titania, zirconia or mixtures thereof.

The high boiling range hydrocarbon products of the Fischer-Tropsch synthesis may then be contacted with the catalyst of the present invention in the presence of hydrogen and catalytically hydroconverted to yield the desired middle distillates. Typical process conditions for carrying out the hydroconversion stage are a temperature of from 175 to 400 °C, preferably from 250 to 375 °C; a hydrogen gas hourly space velocity of from 100 to 10000 Nl/l/hr, preferably from 500 to 5000 Nl/l/hr; a hydrogen partial pressure of from 10 to 250 bars, preferably from 25 to 150 bars; a space velocity of from 0.1 to 5 kg/l/hr, preferably from 0.25 to 2 kg/l/h; and a hydrogen to oil ratio of from 100 to 5000 Nl/kg, preferably from 250 to 2500 Nl/kg.

Typical processes in which the catalyst of the present invention may be applied are disclosed in GB-A-2 077 289, EP-A-0 127 220 and EP-A-0 147 873.

The present invention is further described in the following illustrative example.

### EXAMPLE

### a) Carrier Preparation

A mixture comprising amorphous silica-alumina (ex Grace Davison, pore volume (H₂O) 1.10 ml/g, 13% wt alumina (dry basis); 1834.9g) and alumina (ex Criterion Catalyst Co.; 554.8g) was placed in a mulling machine and mulled for a period of 10 minutes. Acetic acid (10% wt aqueous solution; 200.0g) and water (2190.3g) were added and the resulting mixture mulled for a further 10 minutes. Thereafter, polyacrylamide (Superfloc A1839, 2% wt aqueous solution; 40.0g) was added and mulling continued for a further 10 minutes. Finally, polyelectrolyte (Nalco, 4% wt aqueous solution; 80.0g) was added and the mixture mulled for a final period of 5 minutes.

The resulting mixture was extruded using a 2.25" Bonnot extruder through a cylindrical dieplate, yielding 1.7mm diameter cylindrical extrudates. The resulting extrudates were dried at a temperature of 120 °C for 2 hours and subsequently calcined at a temperature of 600 °C for 2 hours.

### b) Catalyst Preparation

An aqueous solution was prepared by dissolving nickel nitrate hexahydrate (Ni(NO₃)₂.6H₂O, 2.0g) in water (19ml). The solution was acidified by the addition of nitric acid to a pH of 0.8. The cylindrical carrier particles were impregnated using this aqueous solution via the Pore Impregnation technique to give a final nickel loading on the carrier of 2.0% wt. The thus impregnated carrier particles were dried and then calcined at a temperature of 500 °C for a period of 1 hour to yield the final catalyst.

### c) Alkane Hydroisomerisation

The catalyst prepared in (b) hereinabove was tested for activity as a hydroconversion catalyst using, as a representative test, the preparation of iso-C₇ compounds from n-heptane. The test procedure was as follows:

A sample of the catalyst prepared as in (b) hereinabove was loaded into a reactor. The catalyst was reduced in an atmosphere of hydrogen at a temperature of 400°C. Thereafter, the reduced catalyst was contacted with a feed mixture comprising n-heptane and hydrogen in a molar ratio of hydrogen to n-heptane of 4.0, at a weight hourly space velocity of 1.0 kg/l/hr, at a pressure of 30 bars and a temperature of 340 °C. A conversion of n-heptane of 48% wt was recorded with a selectivity to iso-C₇ compounds of 67% wt.

## Claims

1. A catalyst comprising nickel supported on a silica-alumina carrier, which carrier has been prepared from an amorphous silica-alumina starting material having a pore volume of at least 1.0 ml/g.

2. A catalyst according to claim 1, characterised in that the amorphous silica-alumina comprises alumina in an amount in the range of from 5 to 30% by weight, preferably 10 to 20% by weight, more preferably 12 to 15% by weight.

3. A catalyst according to either of claims 1 or 2, characterised in that the pore volume of the amorphous silica-alumina is in the range of from 1.0 to 2.0 ml/g, preferably from 1.0 to 1.5 ml/g.

4. A catalyst according to any one of claims 1 to 3, characterised in that the carrier comprises a binder, preferably selected from silica, alumina, clays, titania, zirconia and mixtures thereof, more preferably alumina.

5. A catalyst according to claim 4, characterised in that the binder is present in an amount in the range of from 5 to 50% by weight, preferably from 15 to 30% by weight, on the basis of total weight of the carrier.

6. A catalyst according to any preceding claim, characterised in that nickel is present in an amount in the range of from 0.05 to 50% by weight, preferably 0.1 to 20.0% by weight, more preferably from 0.2 to 10.0% by weight, on the basis of total weight of the carrier.

7. A process for the preparation of a catalyst as defined in any of the preceding claims, which process comprises preparing a carrier from an amorphous silica-alumina having a pore volume of at least 1.0 ml/g and impregnating the carrier so-formed with nickel by contacting the carrier with a nickel compound in the presence of a liquid.

8. A process according to claim 7, characterised in that the carrier is prepared by a process comprising mulling a mixture comprising amorphous silica-alumina and a liquid, extruding the resulting mixture and drying the extrudates so-obtained.

9. A process according to either of claims 7 or 8, characterised in that the mixture comprises a peptising agent, preferably acetic acid.

10. A process according to any one of claims 7 to 9, characterised in that the pH of the mixture prior to extrusion is in the range of from 1 to 6, preferably from 4 to 6.

11. A process according to any one of claims 7 to 10, characterised in that the mixture comprises a flow improving agent or an extrusion aid.

12. A process according to any one of claims 7 to 11, characterised in that the carrier is calcined prior to impregnation, calcining preferably being effected at a temperature of up to 1000 °C, more preferably from 200 to 1000 °C, especially from 300 to 800 °C.

13. A process according to any one of claims 7 to 12, characterised in that the carrier is contacted with the nickel compound in the presence of the liquid under acidic conditions, preferably at a pH of no greater than 4.0, more preferably no greater than 3.0.

14. A process according to any one of claims 7 to 13, characterised in that the carrier is contacted with the nickel compound in the presence of an acid selected from monocarboxylic acids, dicarboxylic acids, hydrochloric acid, sulphuric acid and nitric acid.

15. A process according to any one of claims 7 to 14, characterised in that the nickel compound is selected from nickel acetate, nickel bromide, nickel bromate, nickel carbonate, nickel chloride, nickel chlorate, nickel fluoride, nickel sulphate and nickel complexes.

16. A catalyst whenever prepared by a process according to any one of claims 7 to 15.

17. The use of a catalyst according to any one of claims 1 to 6 or claim 16 as a hydroconversion catalyst, in particular in the hydroconversion of hydrocarbon products of the Fischer-Tropsch synthesis or in the hydroisomerisation of alkanes.
